# FASCICULE DE BREVET EUROPEEN

(11) **EP 2 620 662 B1**
(45) Date de publication et mention de la délivrance du brevet: **03.03.2021**
(21) Numéro de dépôt: 13152240.1
(22) Date de dépôt: 22.01.2013
(51) Int. Cl.: F16C 32/04, H02K 7/09

(54) **Machine électrique**
Elektrische Maschine
Electric machine

(30) Priorité: 24.01.2012 FR 1250673
(43) Date de publication de la demande: 31.07.2013
(73) Titulaire: GE Energy Power Conversion Technology Ltd., Warwickshire CV21 1BU (GB)
(72) Inventeur: De Lépine, Xavier, 54210 Ville en Vermois (FR)
(74) Mandataire: Serjeants LLP

(56) Documents cités:
- EP-A2- 0 594 033
- WO-A2-02/07289
- US-A- 5 302 874

## Description

La présente invention concerne une machine électrique, notamment moteur comportant:
- un stator,
- un rotor,
- un premier palier principal et un deuxième palier principal, notamment des paliers magnétiques actifs, adaptés pour supporter le rotor par rapport au stator dans une gamme principale de vitesses, et
- un premier palier secondaire adapté pour supporter le rotor par rapport au stator lorsque le premier palier principal est défaillant et un deuxième palier secondaire adapté pour supporter le rotor par rapport au stator lorsque le deuxième palier principal est défaillant.

On connaît de tels moteurs électriques comprenant des paliers principaux, qui sont des paliers magnétiques actifs, afin de supporter en rotation le rotor par rapport au stator.

Ces moteurs comprennent également pour chaque palier principal un palier auxiliaire adapté pour supporter le rotor par rapport au stator lorsque le palier principal associé est défaillant.

Les paliers auxiliaires utilisés dans l'état de la technique fonctionnent uniquement dans une gamme de vitesses donnée, à savoir une gamme de vitesses relativement faibles. Les paliers auxiliaires sont des paliers à roulement, en variante des paliers lisses.

Toutefois, les paliers à roulement ne permettent pas l'utilisation des moteurs dans des conditions environnementales spécifiques, par exemple dans des cas d'environnements sensibles à la pollution.

Par ailleurs, les paliers à roulement n'ont qu'une durée de vie relativement limitée.

Le préambule de la revendication 1 peut être dérivé de WO 02/07289 A2. Le document EP 0594033 A2 décrit un palier magnétique passif.

L'invention a pour but de pallier à au moins l'un des inconvénients ci-dessus. Le but est de proposer un moteur électrique qui permette une utilisation dans un environnement sensible à la pollution et/ou qui ait un fonctionnement fiable.

A cet effet, l'invention a pour objet un moteur électrique tel qu'indiqué ci-dessus, caractérisé en ce que chaque palier secondaire est un palier électrodynamique passif comprenant au moins un aimant permanent et un élément conducteur électrique mobile.

Selon des modes particuliers de réalisation, la machine électrique selon l'invention comporte l'une ou plusieurs des caractéristiques suivantes :
- chaque palier secondaire est adapté pour supporter l'arbre dans une gamme secondaire de vitesses, et la gamme secondaire de vitesses est délimitée en limite basse par une vitesse de seuil de stabilité ;
- un premier palier auxiliaire qui est associé au premier palier principal et/ou un deuxième palier auxiliaire qui est associé au deuxième palier principal, et le ou chaque palier auxiliaire est adapté pour supporter le rotor par rapport au stator dans une gamme auxiliaire de vitesses différente de la gamme principale de vitesses, notamment dont la limite haute de la gamme auxiliaire de vitesses est supérieure ou égale à la vitesse de seuil de stabilité ;
- le ou chaque palier auxiliaire est un palier lisse ;
- le palier lisse soit comprend une bague de palier, et est notamment constitué d'une bague de palier, soit est un palier à patins ;
- le ou chaque palier auxiliaire comprend au moins un roulement ;
- chaque palier secondaire comprend une couronne fixée au rotor et deux éléments fixes par rapport au stator, la couronne comprend l'élément conducteur électrique ou est constituée de l'élément conducteur électrique, et chaque élément fixe comporte l'un des aimants permanents ;
- les deux éléments fixes sont disposés d'un côté et de l'autre de la couronne associée ;
- au moins l'un des éléments fixes recouvre axialement le palier auxiliaire associé ;
- chaque palier auxiliaire est décalé du palier secondaire de telle sorte que la bague de palier du palier auxiliaire considéré est décalée axialement de tous les éléments fixes.

L'invention sera mieux comprise à la lecture de la description qui va suivre, donnée uniquement à titre d'exemple et faite en se référant aux dessins, sur lesquels :
La figure1 montré très schématiquement un moteur électrique selon l'invention en coupe axiale ; et

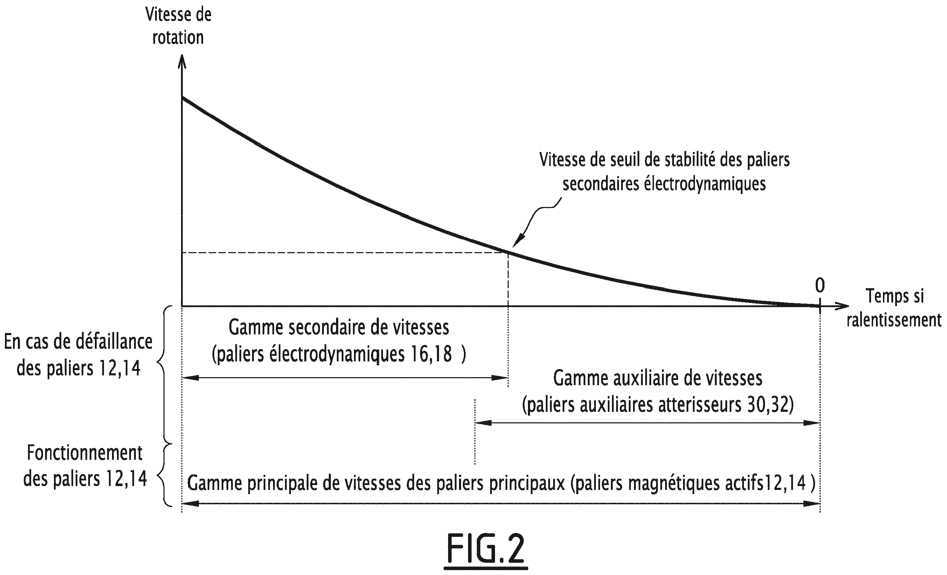

La figure 2 montre les gammes de fonctionnement des différents paliers du moteur selon l'invention.

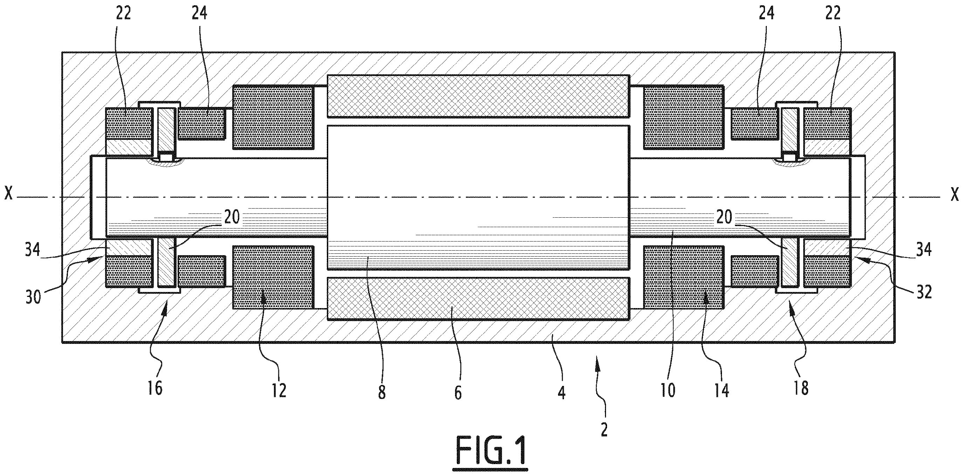

La figure 1 montre un moteur électrique selon l'invention, désigné par la référence générale 2.

Le moteur 2 est par exemple un moteur asynchrone. Le moteur électrique 2 est un moteur ayant une vitesse de rotation nominale très élevée. La vitesse de rotation nominale peut être par exemple supérieure à 5000 tours/minute et peut être supérieure à 10000 tours/minute.

Le moteur électrique 2 comprend un boîtier 4, un stator 6, un rotor 8 et un arbre 10.

Le rotor 8 et l'arbre 10 sont logés dans le boîtier 4 en rotation autour d'un axe de rotation X-X. Dans ce qui suit, les expressions « axialement », « radialement », et « circonférentiellement » seront utilisées par rapport à l'axe de rotation X-X. Les axes propres des éléments décrits ci-après sont considérés coaxiaux à l'axe de rotation, sauf indication contraire.

L'arbre 10 et le rotor 8 pris ensemble ont une masse qui est supérieure à 300 kg et notamment supérieure à 750 kg.

Le moteur électrique 2 comprend également un premier palier principal 12 et un deuxième palier principal 14.

Le premier et le deuxième paliers principaux 12, 14 sont identiques et supportent le rotor 8 par rapport au stator 6 en rotation autour de l'axe X-X. Les deux paliers principaux 12, 14 sont disposés axialement de part et d'autre du rotor 8. Le premier palier principal 12 et le deuxième palier principal 14 sont chacun un palier magnétique actif. Un palier magnétique actif est un palier comportant des électroaimants devant être alimentés en courant électrique et asservis d'une manière continue afin de centrer l'arbre 10 et le rotor 8 par rapport à l'axe de rotation X-X.

Le premier et le deuxième paliers principaux 12, 14 supportent l'arbre dans une gamme principale de vitesses. Cette gamme principale de vitesses est par exemple délimitée par 0 tr/min. La gamme principale de vitesses est également délimitée par la vitesse de rotation nominale du moteur électrique 2 ou par une vitesse supérieure à cette vitesse de rotation nominale (survitesse, autre).

Le moteur électrique 2 comprend également un premier palier secondaire 16 et un second palier secondaire 18. Le premier palier secondaire 16 est adapté pour supporter le rotor 8 par rapport au stator 6 lorsque le premier palier principal 12 est défaillant. Le deuxième palier secondaire 18 est adapté pour supporter le rotor 8 par rapport au stator 6 lorsque le deuxième palier principal 14 est défaillant. Chacun des premier et deuxième paliers secondaires 16, 18 est donc un palier dont la fonction correspond à celle d'un palier atterrisseur, sans pour autant être un palier atterrisseur à proprement parler étant donné qu'il n'y a pas de contact physique créé entre l'arbre 10 et les paliers secondaires 16, 18 lorsque les paliers secondaires supportent l'arbre.

Les deux paliers secondaires 16, 18 sont disposés axialement de part et d'autre du rotor 8.

Les deux paliers secondaires 16, 18 sont identiques et par la suite un seul des paliers secondaires 16, 18 sera décrit.

Le palier secondaire 16, 18 est un palier électrodynamique. Un palier électrodynamique est un palier passif, c'est-à-dire qu'il fonctionne sans apport extérieur d'électricité.

Le palier secondaire 16, 18 comprend une couronne 20 et deux éléments fixes 22, 24.

La couronne 20 est fixée en rotation et en translation à l'arbre 10 et donc au rotor 8. La couronne 20 est donc une couronne rotative. La couronne 20 comporte un élément conducteur électrique, mais amagnétique ou faiblement magnétique. Elle est par exemple en métal ou alliage léger, tel que de l'aluminium.

Chaque élément fixe 22, 24 est fixe par rapport au stator 6 et est fixé au boîtier 4. Chaque élément fixe 22, 24 est composé d'aimants permanents.

Les propriétés du couple aimant permanent - conducteur déterminent la plage de fonctionnement du palier électrodynamique. La direction des courants de circulation dépend de la vitesse de rotation. Cette direction détermine le seuil de stabilité décrit ci-après. Un palier électrodynamique est un palier magnétique passif combinant des aimants permanents à des courants de circulation (courant de Foucault) générés dans les éléments conducteurs de la couronne 20.

Les deux éléments fixes 22, 24 sont disposés d'un côté et de l'autre de la couronne 20 considéré selon l'axe de rotation X-X. Les deux éléments fixes 22, 24 recouvrent radialement la couronne 20.

Le palier secondaire 16, 18 définit une gamme secondaire de vitesses dans laquelle il est adapté pour supporter le rotor 8 et l'arbre 10 par rapport au boîtier 4. Cette gamme secondaire de vitesses est par exemple délimitée vers le haut par la vitesse limite supérieure de la gamme principale de vitesses, par la vitesse nominale du moteur électrique 2 ou une vitesse supérieure à cette vitesse nominale. La gamme secondaire de vitesses est délimitée vers le bas par une vitesse de seuil de stabilité du palier secondaire 16, 18. La vitesse de seuil de stabilité est strictement supérieure à 0 tr/min et est par exemple comprise entre 1000 tr/min et 10000 tr/min.

Le moteur électrique 2 comprend également un premier palier auxiliaire 30 et un deuxième palier auxiliaire 32. Le premier palier auxiliaire 30 est associé au premier palier principal 12 tandis que le deuxième palier auxiliaire 32 est associé au second palier principal 14.

Chacun des premier et deuxième paliers auxiliaires 30, 32 est adapté pour supporter le rotor 8 et l'arbre 10 par rapport au stator 6 lorsque le premier palier principal 12 ou le deuxième palier principal 14 est défaillant, et lorsque les paliers secondaires 16, 18 ne supportent plus l'arbre 10 étant donné que la vitesse de rotation est inférieure à la vitesse de seuil de stabilité. Chacun des premier et deuxième paliers auxiliaires 30, 32 est donc un palier atterrisseur. Chacun des paliers auxiliaires 30, 32 est un palier atterrisseur à basse vitesse de rotation lorsque la vitesse de rotation est inférieure à la vitesse de seuil de stabilité du palier secondaire.

Le premier palier auxiliaire 30 et le deuxième palier auxiliaire 32 sont par exemple des paliers lisses. Chaque palier lisse comprend une bague de palier 34 et est notamment constitué de cette bague de palier 34. Le palier lisse peut également être un palier à patins. Dans ce cas, les patins sont formés par des segments annulaires. La bague de palier 34 ou les patins sont par exemple en cuivre ou un alliage à base de cuivre, ou en une matière plastique par exemple à base de PEEK (polyétheréthercétone). La bague 34 ou les patins peuvent également être en un matériau composite, tel que comprenant des fibres de verre, de carbone, ou de PEEK.

Chaque palier auxiliaire 30, 32 est adapté pour supporter l'arbre 10 dans une gamme auxiliaire de vitesses qui est différente de la gamme principale de vitesses.

La gamme auxiliaire de vitesses est également différente de la gamme secondaire de vitesses. Généralement, la gamme auxiliaire de vitesses est inférieure à la gamme secondaire de vitesses, mais elle peut chevaucher la gamme secondaire de vitesses. La gamme auxiliaire de vitesses comprend des vitesses inférieures à la vitesse de seuil de stabilité du palier secondaire associé 16, 18. La gamme auxiliaire de vitesses est par exemple comprise entre 0tr/min et une vitesse égale ou supérieure à la vitesse de seuil de stabilité (limite de vitesse basse des paliers secondaires). Ainsi, on a un chevauchement de vitesses entre gamme auxiliaire de vitesses et gamme secondaire de vitesses. Ainsi, lorsqu'il y a une défaillance des paliers principaux 12, 14, quelque soit la vitesse de rotation, qui est décroissante, le rotor 8 et l'arbre 10 seront supportés par les paliers secondaires et par les paliers auxiliaires jusqu'à l'arrêt.

Les paliers auxiliaires 30, 32 ont chacun une gamme de vitesses de fonctionnement inférieure à la gamme de vitesses des paliers secondaires 16, 18. La limite haute de cette gamme auxiliaire de vitesses des paliers auxiliaires 30, 32 est égale ou supérieure à la limite inférieure de la gamme de vitesses des paliers secondaires.

L'un ou les deux éléments fixes 22, 24 recouvre axialement le palier auxiliaire associé 30, 32. Dans le cas illustré sur la figure, c'est l'élément 22 qui recouvre axialement le palier auxiliaire 30, 32. Ainsi, les dimensions du moteur 2, pour une puissance donnée sont relativement faibles.

Le moteur électrique 2 selon l'invention fonctionne de la manière suivante.

Lors d'un fonctionnement correct des paliers principaux, chaque palier principal 12, 14 supporte l'arbre 10 et le rotor 8 par rapport au stator 6 autour de l'axe de rotation X-X. Dans ce cas, aucun des paliers auxiliaires 30, 32 ne supporte l'arbre 10 et les paliers secondaires 16, 18 contribuent à supporter l'arbre 10. Dans ce cas, l'arbre s'étend à distance radiale des paliers auxiliaires 30, 32.

Lorsque le rotor 8 et l'arbre 10 sont entraînés à une vitesse de rotation située dans la gamme secondaire de vitesses des premier palier secondaire 16 et deuxième palier secondaire 18, lors d'une défaillance des paliers principaux 12, 14, l'arbre 10 est tout d'abord supporté uniquement par les paliers secondaires 16, 18 associés, mais n'est pas en contact des paliers auxiliaires 30, 32. Ainsi, à des vitesses de rotation élevées, les paliers auxiliaires 30, 32 ne peuvent pas être endommagés puisque l'arbre s'étend à distance radiale des paliers auxiliaires (pas de contact), pour un fonctionnement fiable qui est un des buts de l'invention.

Une fois que l'arbre 10 et le rotor 8 ont été freinés de telle sorte que la vitesse de rotation se trouve dans la gamme auxiliaire de vitesses des paliers auxiliaires 30, 32 et notamment lorsque la vitesse sort de la gamme secondaire de vitesses, uniquement les paliers auxiliaires 30, 32 supportent l'arbre 10.

Les paliers secondaires 16, 18 électrodynamiques sont par conception robustes puisqu'il n'y a jamais de contact quelque soit la vitesse de rotation, contrairement aux paliers atterrisseurs à roulement. Ainsi, en cas de défaillance des paliers principaux, le fonctionnement est plus fiable pour un nombre bien plus élevé possible de ralentissements à partir d'une vitesse élevée, grâce aux paliers secondaires électrodynamiques 16, 18 sans contact, que les technologies actuelles qui utilisent des paliers atterrisseurs à roulement. En effet, les paliers électrodynamiques n'ont pas de friction et pas d'usure. Egalement, c'est pourquoi les paliers auxiliaires atterrisseurs 30, 32 qui sont des paliers lisses sont mieux adaptés aux conditions environnementales agressives décrites ci-dessous.

Par ailleurs, le moteur selon l'invention peut travailler dans des conditions environnementales qu'un moteur électrique ayant des paliers atterrisseurs à roulements ne permet pas, comme en présence de gaz humide, gaz sale ou gaz acide (présence notamment de H₂S, CO₂, Hg, etc.). Ceci est le 2^{ème} but de l'invention en plus d'un fonctionnement fiable.

En variante non représentée, chaque palier auxiliaire 30, 32 est décalé du palier secondaire 16, 18 de telle sorte que la bague de palier 34 est décalée axialement de tous les éléments fixes 22 ou 24.

En variante encore, le ou chaque palier auxiliaire 30, 32 comprend ou est constitué par un ou des roulements.

Enfin, l'invention a été décrite en se référant à un moteur. Elle peut être appliquée à n'importe quelle machine électrique tournante, par exemple à un générateur, un moteur asynchrone ou synchrone.

## Revendications

1. Machine électrique, notamment moteur (2), du type comportant :
- un stator (6),
- un rotor (8),
- un premier palier principal (12) et un deuxième palier principal (14), notamment des paliers magnétiques actifs, adaptés pour supporter le rotor (8) par rapport au stator (6) dans une gamme principale de vitesses, et
- un premier palier secondaire (16) adapté pour supporter le rotor par rapport au stator lorsque le premier palier principal est défaillant et un deuxième palier secondaire (18) adapté pour supporter le rotor par rapport au stator lorsque le deuxième palier principal (14) est défaillant,
**caractérisé en ce que** chaque palier secondaire (16, 18) est un palier électrodynamique passif comprenant au moins un aimant permanent et un élément conducteur électrique mobile.

2. Machine électrique selon la revendication 1, **caractérisé en ce que** chaque palier secondaire (16, 18) est adapté pour supporter l'arbre dans une gamme secondaire de vitesses, et **en ce que** la gamme secondaire de vitesses est délimitée en limite basse par une vitesse de seuil de stabilité.

3. Machine électrique selon la revendication 1 ou 2, **caractérisé en ce qu'**elle comporte un premier palier auxiliaire (30) qui est associé au premier palier principal et/ou un deuxième palier auxiliaire (32) qui est associé au deuxième palier principal, et **en ce que** le ou chaque palier auxiliaire (30, 32) est adapté pour supporter le rotor par rapport au stator dans une gamme auxiliaire de vitesses différente de la gamme principale de vitesses, notamment dont la limite haute de la gamme auxiliaire de vitesses est supérieure ou égale à la vitesse de seuil de stabilité.

4. Machine électrique selon la revendication 3, **caractérisé en ce que** le ou chaque palier auxiliaire est un palier lisse.

5. Machine électrique selon la revendication 4, **caractérisé en ce que** le palier lisse soit comprend une bague de palier (34), et est notamment constitué d'une bague de palier, soit est un palier à patins.

6. Machine électrique selon la revendication 3, **caractérisé en ce que** le ou chaque palier auxiliaire comprend au moins un roulement.

7. Machine électrique selon l'une quelconque des revendications 1 à 6, **caractérisé en ce que** chaque palier secondaire (16, 18) comprend une couronne (20) fixée au rotor et deux éléments (22, 24) fixes par rapport au stator, **en ce que** la couronne comprend l'élément conducteur électrique ou est constituée de l'élément conducteur électrique, et **en ce que** chaque élément fixe comporte l'un des aimants permanents.

8. Machine électrique selon la revendication 7, **caractérisé en ce que** les deux éléments fixes (22, 24) sont disposés d'un côté et de l'autre de la couronne associée.

9. Machine électrique selon l'une des revendications 7 ou 8 dépendantes de l'une des revendications 3 à 6, **caractérisé en ce qu'**au moins l'un des éléments fixes (22) recouvre axialement le palier auxiliaire associé.

10. Machine électrique selon l'une des revendications 7 ou 8 dépendantes de l'une des revendications 3 à 6, caractérisé en ce chaque palier auxiliaire (30, 32) est décalé du palier secondaire (16, 18) de telle sorte que la bague de palier (34) du palier auxiliaire considéré est décalée axialement de tous les éléments fixes (22 ou 24).

## Patentansprüche

1. Elektromaschine, insbesondere Motor (2) vom Typ, der umfasst:
- einen Stator (6),
- einen Rotor (8),
- ein erstes Hauptlager (12) und ein zweites Hauptlager (14), insbesondere aktive Magnetlager, die dazu angepasst sind, den Rotor (8) in Bezug auf den Stator (6) in einem Hauptbereich von Drehzahlen zu tragen, und
- ein erstes Nebenlager (16), das dazu angepasst ist, den Rotor in Bezug auf den Stator zu tragen, wenn das erste Hauptlager versagt, und ein zweites Nebenlager (18), das dazu angepasst ist, den Rotor in Bezug auf den Stator zu tragen, wenn das zweite Hauptlager (14) versagt,
**dadurch gekennzeichnet, dass** jedes Nebenlager (16, 18) ein passives elektrodynamisches Lager ist, das mindestens einen Dauermagnet und ein bewegliches elektrisch leitendes Element umfasst.

2. Elektromaschine nach Anspruch 1, **dadurch gekennzeichnet, dass** jedes Nebenlager (16, 18) dazu angepasst ist, die Welle in einem Nebenbereich von Drehzahlen zu tragen, und dass der Nebenbereich von Drehzahlen am unteren Limit durch eine Stabilitätsschwellendrehzahl begrenzt ist.

3. Elektromaschine nach Anspruch 1 oder 2, **dadurch gekennzeichnet, dass** sie ein erstes Hilfslager (30) umfasst, das mit dem ersten Hauptlager assoziiert ist, und/oder ein zweites Hilfslager (32), das mit dem zweiten Hauptlager assoziiert ist, und dass das oder jedes Hilfslager (30, 32) dazu angepasst ist, den Rotor in Bezug auf den Stator in einem Hilfsbereich von Drehzahlen zu tragen, der von dem Hauptbereich von Drehzahlen unterschiedlich ist, dessen oberes Limit des Hilfsbereichs von Drehzahlen insbesondere größer oder gleich der Stabilitätsschwellendrehzahl ist.

4. Elektromaschine nach Anspruch 3, **dadurch gekennzeichnet, dass** das oder jedes Hilfslager ein Gleitlager ist.

5. Elektromaschine nach Anspruch 4, **dadurch gekennzeichnet, dass** das Gleitlager entweder einen Lagerring (34) umfasst und insbesondere aus einem Lagerring besteht, oder ein Kippsegmentlager ist.

6. Elektromaschine nach Anspruch 3, **dadurch gekennzeichnet, dass** das oder jedes Hilfslager mindestens ein Wälzlager umfasst.

7. Elektromaschine nach einem der Ansprüche 1 bis 6, **dadurch gekennzeichnet, dass** jedes Nebenlager (6, 18) einen Krone (20), der an dem Rotor befestigt ist, umfasst, und zwei Elemente (22, 24), die in Bezug auf den Stator stationär sind, dass der Kranz das elektrisch leitende Element umfasst oder aus dem elektrisch leitenden Element besteht, und dass jedes stationäre Element einen der Dauermagnete umfasst.

8. Elektromaschine nach Anspruch 7, **dadurch gekennzeichnet, dass** die zwei stationären Elemente (22, 24) auf der einen und der anderen Seite des dazugehörenden Kranzes angeordnet sind.

9. Elektromaschine nach einem der Ansprüche 7 oder 8, die von einem der Ansprüche 3 bis 6 abhängen, **dadurch gekennzeichnet, dass** mindestens eines der stationären Elemente (22) das dazu gehörende Hilfslager axial abdeckt.

10. Elektromaschine nach einem der Ansprüche 7 oder 8, die von einem der Ansprüche 3 bis 6 abhängen, **dadurch gekennzeichnet, dass** jedes Hilfslager (30, 32) von dem Nebenlager (16, 18) derart versetzt ist, dass der Lagerring (34) des betreffenden Hilfslagers axial von allen stationären Elementen (22 oder 24) versetzt ist.

## Claims

1. Electric machine, in particular motor (2), of the type comprising:
- a stator (6),
- a rotor (8),
- a first main bearing (12) and a second main bearing (14), in particular active magnetic bearings, adapted to support the rotor (8) with respect to the stator (6) in a main range of speeds, and
- a first secondary bearing (16) adapted to support the rotor with respect to the stator when the first main bearing is faulty and a second secondary bearing (18) adapted to support the rotor with respect to the stator when the second main bearing (14) is faulty,
**characterised in that** each secondary bearing (16, 18) is a passive electrodynamic bearing comprising at least one permanent magnet and a mobile electric conductor element.

2. Electric machine according to claim 1, **characterised in that** each secondary bearing (16, 18) is adapted to support the shaft in a secondary range of speeds, and **in that** the secondary range of speeds is delimited in the lower limit by a threshold stability speed.

3. Electric machine according to claim 1 or 2, **characterised in that** it comprises a first auxiliary bearing (30) which is associated with the first main bearing and/or a second auxiliary bearing (32) which is associated with the second main bearing, and **in that** the or each auxiliary bearing (30, 32) is adapted to support the rotor with respect to the stator in an auxiliary range of speeds different from the main range of speeds, in particular of which the upper limit of the auxiliary range of speeds is greater than or equal to the threshold stability speed.

4. Electric machine according to claim 3, **characterised in that** the or each auxiliary bearing is a smooth bearing.

5. Electric machine according to claim 4, **characterised in that** the smooth bearing either comprises a bearing ring (34), and is in particular constituted of a bearing ring, or is a pad bearing.

6. Electric machine according to claim 3, **characterised in that** the or each auxiliary bearing comprises at least one roller.

7. Electric machine according to any one of claims 1 to 6, **characterised in that** each secondary bearing (16, 18) comprises a crown (20) fixed to the rotor and two elements (22, 24) fixed with respect to the stator, **in that** the crown comprises the electric conductor element or is constituted of the electric conductor element, and **in that** each fixed element comprises one of the permanent magnets.

8. Electric machine according to claim 7, **characterised in that** the two fixed elements (22, 24) are arranged on one side and on the other of the associated crown.

9. Electric machine according to one of claims 7 or 8 dependent from one of claims 3 to 6, **characterised in that** at least one of the fixed elements (22) axially covers the associated auxiliary bearing.

10. Electric machine according to one of claims 7 or 8 dependent from one of claims 3 to 6, **characterised in that** each auxiliary bearing (30, 32) is offset from the secondary bearing (16, 18) such that the bearing ring (34) of the auxiliary bearing considered is axially offset from all the fixed elements (22 or 24).
